# FASCICULE DE BREVET EUROPEEN

(11) **EP 1 245 578 B1**
(45) Date de publication et mention de la délivrance du brevet: **18.04.2007**
(21) Numéro de dépôt: 02290744.8
(22) Date de dépôt: 25.03.2002
(51) Int. Cl.: C08B 30/18, A23L 1/09, A23L 1/308, A23L 2/52, A23L 1/39

(54) **Boissons enrichies en fibres**
Mit Fasern angereicherte Getränke
Fibre-enriched beverages

(30) Priorité: 30.03.2001 FR 0104410
(43) Date de publication de la demande: 02.10.2002
(73) Titulaire: Roquette Frères, 62136 Lestrem (FR)
(72) Inventeur: Serpelloni, Michel, 62660 Beuvry-Les-Bethune (FR)
(74) Mandataire: Boulinguiez, Didier

(56) Documents cités:
- EP-A- 1 006 128
- WO-A-95/02969
- US-A- 5 851 578
- US-A- 6 069 131
- DATABASE WPI Section Ch, Week 200041 Derwent Publications Ltd., London, GB; Class D13, AN 2000-474088 XP002184875 & RU 2 140 178 C (BIS CO LTD), 27 octobre 1999 (1999-10-27)

## Description

L'invention a pour objet une boisson enrichie en fibres, faiblement calorique.

Plus précisément, l'invention a pour objet une boisson faiblement calorique et stable dans le temps, contenant des maltodextrines branchées.

Elle a en outre pour objet l'utilisation de maltodextrines branchées pour substituer tout ou partie des sucres dans une boisson faiblement calorique.

Les boissons faiblement caloriques, c'est à dire à teneur réduite en sucres et sans alcool, que l'on appellera par la suite « boissons douces » sont un secteur privilégié pour les édulcorants intenses, en tant que substituts des sucres. La plupart des boissons douces à teneur réduite en calories contiennent 0 ou 1 calorie par litre et sont édulcorées exclusivement avec des édulcorants intenses tels que la saccharine, l'aspartame, l'acésulfame K, le cyclamate. Mais cette substitution n'est pas simple. En effet, dans les boissons sans sucre, les premières formules de remplacement total des sucres par un édulcorant unique ont évolué vers des solutions faisant appel à des mélanges, permettant de réduire certains défauts des édulcorants intenses : manque de stabilité au pH ou à la température, arrière-goûts prononcés au-delà de certaines concentrations, et d'imiter au maximum le profil gustatif du sucre qui fait référence.

Il a été proposé d'utiliser en mélange les édulcorants et les sucres. Pour cela, le produit obtenu doit avoir, selon la législation européenne, une valeur énergétique réduite de 30% au moins par rapport à la référence classique « pur sucre ». Il existe sur le marché des boissons carbonatées « mixtes » dont la saveur sucrée est fournie pour moitié par un édulcorant intense et pour l'autre moitié par le sucre ou un sirop de glucose, qui maintient une saveur sucrée optimale et stable dans le temps, alors que l'édulcorant se décompose sous l'effet de l'acidité.

Les sucres interviennent dans les boissons au niveau de l'équilibre des saveurs sucrée/acide par un effet de suppression mutuelle avec les acides organiques comme l'acide citrique souvent utilisé. Il contribue aussi à renforcer les notes aromatiques, ce qui contraint les formulateurs à revoir totalement leurs formulations aromatiques en cas de substitution partielle ou totale du ou des sucres.

Enfin, dans les boissons douces classiques, l'utilisation de 80 à 120 grammes de sucres par litre permet d'atteindre la viscosité idoine qui se traduit par une consistance en bouche, un « corps » significatif et agréable. Le remplacement total des sucres par de faibles quantités d'édulcorants intenses engendre au contraire une boisson très plate au palais.

Il a été proposé, en particulier dans le document EP 0.792.589, d'utiliser l'érythritol comme agent de stabilisation de l'aspartame dans les boissons faiblement caloriques. L'utilisation de polyols dans cette application peut toutefois poser des problèmes de tolérance et engendrer des troubles intestinaux.

Il existait donc un besoin pour un ingrédient capable de substituer les sucres en réduisant l'apport calorique et la cariogénicité de la boisson, en assurant l'apport de corps en bouche de celle-ci, tout en étant stable dans les conditions de pH acide usuelles.

La Demanderesse a alors trouvé que ce but pouvait être atteint dès lors qu'on utilise, en tant que substitut des sucres, une maltodextrine particulière.

L'invention a donc pour objet une boisson faiblement calorique caractérisée en ce qu'elle comprend 1,5 à 90 g, en poids sec par litre de boisson, de maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole.

Par maltodextrines branchées on entend au sens de la présente invention les maltodextrines décrites dans la demande de brevet EP 1.006.128 dont la Demanderesse est titulaire. Ces maltodextrines branchées présentent un caractère d'indigestibilité qui a pour conséquence de diminuer leur pouvoir calorique, en empêchant leur assimilation au niveau de l'intestin grêle. Elles constituent donc une source de fibres indigestibles. A titre indicatif, leur taux de fibres insolubles est généralement supérieur à 50% sur matière sèche. Leur faible teneur en molécules de bas degré de polymérisation (« DP ») contribue également à leur caloricité réduite. Leur teneur élevée en liaisons glucosidiques 1→6 a pour conséquence d'abaisser leur pouvoir cariogène en réduisant leur assimilation par les micro-organismes de la cavité buccale. Ce taux élevé en liaisons 1→6 leur confère également des propriétés prébiotiques tout à fait particulières : il est en effet apparu que les bactéries du cæcum et du colon de l'homme et des animaux, telles que les bactéries butyrogènes, lactiques ou propioniques métabolisent des composés hautement branchés. D'autre part, ces maltodextrines branchées favorisent le développement des bactéries bifidogènes au détriment des bactéries indésirables. Il en résulte des propriétés tout à fait bénéfiques pour la santé du consommateur.

Des produits présentant des fonctionnalités proches, comme notamment les fructo-oligo-saccharides commercialisés sous la dénomination ACTILIGHT par BEGHIN-SAY ou par ORAFTI sous la dénomination RAFTILOSE, qui présentent également des effets bénéfiques pour la santé en termes de propriétés bifidogènes, ont été proposés dans les boissons douces enrichies en fibres. Ces produits présentent cependant le désavantage d'être très instables en conditions de pH acides. Cette instabilité se traduit par une hydrolyse progressive au cours du stockage, qui génère une libération indésirable de glucose et de fructose. Cette instabilité est dissuasive pour une utilisation dans les boissons douces qui présentent pratiquement toutes un pH acide. Ces produits sont donc plutôt utilisés dans des boissons de type eaux minérales dont le pH est généralement plus élevé.

La Demanderesse a trouvé que l'incorporation desdites maltodextrines branchées permettait avantageusement une substitution partielle ou totale des sucres dans les boissons, en apportant à celles-ci une viscosité en bouche identique, en réduisant leur pouvoir calorique et leur cariogénicité, et en constituant un apport de fibres indigestibles dans une application à laquelle ne pouvaient prétendre les fructo-oligosaccharides.

Ainsi, en substituant dans une boisson la totalité des sucres généralement présents à hauteur de 80 à 120 grammes par litre de boisson par un mélange de maltodextrines branchées et d'édulcorants intenses choisi de manière à ce que la teneur en maltodextrine branchées assure suffisamment de corps à la boisson et la teneur en édulcorants intenses assure la saveur sucrée voulue, on obtient une boisson allégée jusqu'à 60% de sa valeur calorique initiale, présentant des qualités organoleptiques satisfaisantes, selon un panel de dégustation.

Une boisson faiblement calorique enrichie en fibres conforme à l'invention comprend 1,5 à 90 g, de préférence 5 à 90g et plus préférentiellement encore de 10 à 90g sec de maltodextrines branchées par litre de boisson, de manière à obtenir en cas d'utilisation d'édulcorants intenses l'allègement d'au moins 30% de la valeur calorique standard d'une boisson contenant des sucres. Les maltodextrines branchées présentent un taux de fibres insolubles supérieur à 50% sur sec, déterminé selon la méthode AOAC N° 985-29 (1986). En deçà de 1,5 g de maltodextrines branchées par litre de boisson conforme à l'invention, l'apport de fibres est insuffisant pour être détecté.

Toutes les compositions décrites dans la demande de brevet EP 1.006.128 sont appropriées à la préparation de boissons selon l'invention.

Selon une variante préférée, celles-ci présentent une teneur en sucres réducteurs comprise entre 2 et 5% et une masse moléculaire en nombre comprise entre 2000 et 3000 g/mole.

Selon une autre variante avantageuse, tout ou partie de ces maltodextrines branchées sont hydrogénées.

La boisson conforme à l'invention peut comprendre en outre un édulcorant intense choisi dans le groupe constitué par l'aspartame, l'alitame, le néotame l'acésulfame K, la saccharine, le cyclamate, le sucralose, les stéviosides, la néohespéridine seuls ou en mélange.

De préférence, ledit édulcorant intense est présent à hauteur de 0,01 à 1,0 g/l.

Ladite boisson peut également comprendre des acides organiques tels que notamment l'acide citrique, phosphorique ou ascorbique seuls ou en mélange, du benzoate de sodium, et un arôme.

L'invention a également pour objet une boisson enrichie en fibres, dans laquelle lesdites maltodextrines branchées ne substituent pas le sucre, mais constituent un apport de fibres bénéfiques pour la santé, résistantes aux traitements thermiques et stables au stockage même en conditions acides. Il peut s'agir par exemple de boissons de type sodas, jus de fruits ou de légumes ou encore eaux minérales aromatisées ou non. Il peut s'agir également de boissons consommées le plus souvent chaudes comme les soupes. En effet, dans les soupes, l'incorporation desdites maltodextrines branchées est tout à fait avantageuse pour les raisons suivantes : les soupes sont enrichies en fibres et présentent des propriétés organoleptiques améliorées notamment en termes de consistance et d'onctuosité, en termes d'absence d'arrière-goût désagréable et de saveur sucrée plus faible que lorsqu'on utilise par exemple des fructo-oligo-saccharides. De plus, la stabilité thermique et à pH acide des maltodextrines branchées est ici encore très avantageuse puisque les soupes sont des produits stérilisés ou pasteurisés et présentent le plus souvent un pH acide. C'est pourquoi on ne peut utiliser des maltodextrines classiques ou des fibres solubles de l'art antérieur, peu stables dans ces conditions.

La boisson comprend avantageusement 1,5 à 90 g sec par litre de boisson de maltodextrines branchées présentant entre 15 et 35% de liaisons glucosidiques 1→6, une teneur en sucres réducteurs inférieure à 20% et de préférence comprise entre 2 et 5%, un indice de polymolécularité inférieur à 5 et une masse moléculaire moyenne en nombre Mn au plus égale à 4500 g/mole et de préférence comprise entre 2000 et 3000 g/mole.

L'invention concerne également une soupe enrichie en fibres caractérisée en ce qu'elle comprend 1 à 30%, de préférence 1 à 15% en poids desdites maltodextrines branchées. La soupe ainsi obtenue est avantageusement stable à pH acide et à chaud. Elle peut se présenter sous forme liquide, concentrée ou non, ou encore sous forme déshydratée à reconstituer.

L'invention a en outre pour objet l'utilisation de maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole, pour substituer tout ou partie des sucres dans une boisson faiblement calorique. On entend par sucres au sens de la présente invention, le saccharose, le glucose, les sirops de glucose, l'isoglucose ainsi que tous les oses utilisés couramment dans la préparation de boissons sucrées ou de soupes. Selon une variante avantageuse, lesdites maltodextrines branchées présentent une teneur en sucres réducteurs comprise entre 2 et 5% et une masse moléculaire moyenne en nombre Mn comprise entre 2000 et 3000 g/mole.

De préférence, lesdites maltodextrines branchées sont incorporées à la boisson faiblement calorique à raison de 1,5 à 90 g sec par litre de boisson. De manière particulièrement avantageuse, lesdites maltodextrines branchées peuvent être incorporées sous forme de mélanges liquides avec divers sucres ou polyols couramment utilisés dans les boissons. Ces mélanges liquides présentent de plus l'avantage d'être particulièrement stables vis à vis de la qualité bactériologique. L'invention concerne donc également une boisson enrichie en fibres, allégée ou non en sucres caractérisée en ce que tout ou partie desdites maltodextrines branchées sont incorporées sous forme de mélange liquide avec un ou plusieurs sucres ou polyols choisis dans le groupe constitué par le glucose, le fructose, le xylose, le lactulose, l'érythrose, le maltitol, le xylitol, l'érythritol, l'isomalt.

De même, peuvent être associées aux dites maltodextrines branchées des dextrines indigestibles telles que celles commercialisées par exemple par la société MATSUTANI sous l'appellation FIBERSOL®.

L'invention sera mieux comprise à la lecture des exemples qui suivent et des figures qui s'y rapportent.

### Exemple 1 : préparation de boissons gazeuses sans alcool.

On prépare des boissons gazeuses sans alcool contenant d'une part du saccharose, et d'autre part un sirop de glucose et des maltodextrines branchées en tant que substitut total du saccharose.

Quantités en grammes pour 1 litre de boisson :

| | **Témoin (saccharose)** | **Essai 1 (sirop de glucose)** | **Essai 2 (selon l'invention)** |
|---|---|---|---|
| **Saccharose** | 100 | | |
| **Sirop de glucose** | | 86,42 | |
| **Maltodextrines branchées** | | | 73,68 |
| **Aspartame** | | 0,078 | 0,118 |
| **Acésulfame K** | | 0,078 | 0,118 |
| **Arôme citron** | 0,7 | 0,7 | 0,7 |
| **Acide citrique (sec)** | 1,9 | 1,9 | 1,9 |
| **Benzoate de sodium (sec)** | 0,09 | 0,09 | 0,09 |
| **Eau carbonatée à 4°C** | qsp 1l | qsp 1l | qsp 1l |
| Saccharose : sucre semoule tamisé (BEGHIN-SAY) | | | |
| Sirop de glucose : FLOLYS®E7081S | | | |
| Aspartame : NUTRASWEET | | | |
| Acesulfame K : HOESCHT | | | |
| Arôme citron : AG 31711 (QUEST) | | | |

Les maltodextrines branchées présentent entre 15 et 35% de liaisons glucosidiques 1→6, une teneur en sucres réducteurs comprise entre 2 et 5%, un indice de polymolécularité inférieur à 5 et une masse moléculaire moyenne en nombre Mn comprise entre 2000 et 3000 g/mole :

| | |
|---|---|
| Sucres réducteurs | 2,3 |
| Mn (g/mole) | 2480 |
| Mw (g/mole) | 5160 |
| Liaison 1,2 (%) | 10 |
| Liaison 1,3 (%) | 12 |
| Liaison 1,4 (%) | 49 |
| Liaison 1,6 (%) | 29 |

Elles présentent en outre un taux de fibres insolubles de 55% sur sec, déterminé selon la méthode AOAC (N°985-29).

On prépare 0,5 litres d'eau gazéifiée. On ajoute ensuite les édulcorants et/ou le sucre ou substitut de sucre. On incorpore ensuite le reste des ingrédients et on ajoute de l'eau jusqu'à un volume de 1 litre. Les boissons obtenues sont conservées au réfrigérateur, avant soumission à un panel de dégustation.

Un jury de 8 personnes effectue une évaluation sur les trois boissons des critères suivants :
- saveur sucrée
- intensité aromatique
- viscosité en bouche
- préférence

Chaque critère est classé sur une échelle de 1 à 5 en comparaison avec le témoin saccharose.

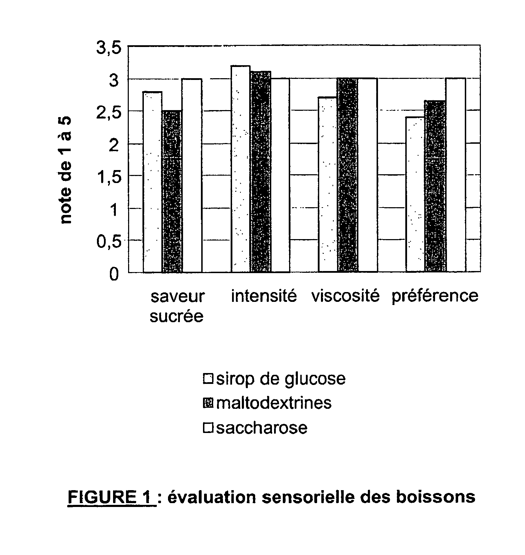

Les résultats sont représentés en figure 1. On constate qu'aucune différence significative n'apparaît entre les trois boissons. Il semble que les boissons selon l'invention soient toutefois préférées à celles incluant le sirop de glucose en tant que substitut du saccharose.

### Exemple 2 : étude de stabilité en solution.

Afin d'estimer la stabilité des maltodextrines branchées dans les boissons, on prépare des solutions à différents pH, contenant soit des fructo-oligo-saccharides (ACTILIGHT 950P ou RAFTILOSE P35), soit des maltodextrines branchées conformes à l'invention.

On mesure au cours du stockage l'évolution des masses moléculaires de ces oligosaccharides en solution, par exclusion stérique suivie d'une détection par réfractométrie différentielle.

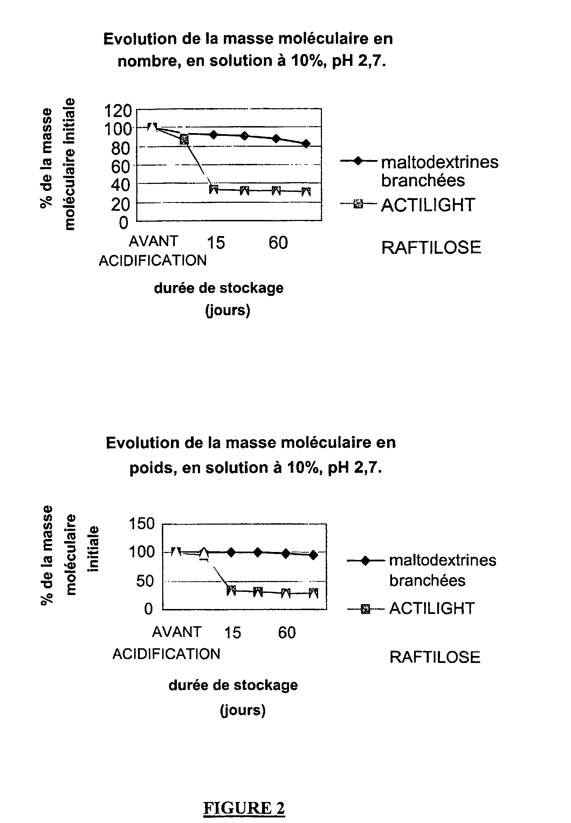

Les résultats sont illustrés en figure 2.

Dans le cas des maltodextrines branchées, on constate une très légère répercussion de l'acidification des solutions. Il y a donc une légère hydrolyse aux pH très acides (inférieurs à 3) qui se traduit par une évolution du poids moléculaire vers des valeurs plus basses. Après deux semaines de stockage, les différences ne sont pas supérieures à celles observées immédiatement après acidification. Après 1 mois de stockage, seules les valeurs obtenues pour les pH très faibles (inférieurs à 2,7) ont diminué par rapport au vieillissement de deux semaines. On passe d'un poids moléculaire en nombre de 2800 daltons à 2400 daltons pour des solutions à pH 2.

Dans le cas des fructo-oligo-saccharides, après deux semaines de stockage à pH 2 le poids moléculaire est réduit à 30% de sa valeur initiale. Après 1 mois, les solutions à pH 2 et 2,7 contiennent de l'ACTILIGHT très fortement dégradé.

Conclusion : les maltodextrines branchées sont bien adaptées à la préparation de sodas, de jus de fruits ou de légumes, présentant un pH généralement inférieur à 3.

### Exemple 3 : stabilité après pasteurisation

On prépare des jus de fruits comprenant des maltodextrines branchées selon l'invention, hydrogénées ou non, que l'on soumet à un traitement de pasteurisation pendant 17 minutes à 74°C. On prépare également un témoin sans maltodextrines branchées et un témoin comprenant des fructo-oligo-saccharides. On compare les teneurs avant et après traitement, ainsi qu'après stockage. Tous les jus de fruits on un pH de 3,8. Les résultats sont donnés par le tableau suivant :

| | TEMOIN | 7% maltodextrines branchées | | 7% maltodextrines branchées hydrogénées | | 7% fructo-oligosaccharides (ACTILIGHT®) | |
|---|---|---|---|---|---|---|---|
| | Saccharose | Saccharose | **Malt. branch.** | Saccharose | **Malt. branch. hydrogénées** | Saccharose | **FOS** |
| Avant pasteurisation | 2,5 | 2,4 | **7,0** | 2,1 | **6,8** | 2,3 | **6,7** |
| Après pasteurisation | 1,4 | 1,6 | **7,0** | 1,6 | 6,8 | 2,4 | **4,5** |
| Après pasteurisation + 1,5 mois | nd | nd | **6,9** | nd | 6,9 | 3,8 | **2,4** |
| Après pasteurisation + 3 mois | 1,5 | 1,5 | **7,1** | 1,2 | 7,1 | 3,4 | **1,7** |

Ces résultats démontrent l'absence de dégradation des maltodextrines branchées selon l'invention, hydrogénées ou non, car elles ne sont hydrolysées ni au cours du traitement thermique, ni au cours du stockage pendant trois mois. Les fructo-oligosaccharides se dégradent fortement avec la pasteurisation (-30%) et avec la conservation (-60% après trois mois par rapport à la valeur après pasteurisation). Ceci est observé à la fois par la diminution du taux de FOS et par l'augmentation de la teneur en saccharose (produit d'hydrolyse). Ceci confirme l'intérêt tout particulier des maltodextrines selon l'invention dans des boissons enrichies en fibres, destinées en particulier à être stérilisées ou pasteurisées.

### Exemple 4 : préparation de soupes.

On prépare, selon le protocole suivant une soupe concentrée à la tomate (pour être consommée, elle doit être diluée à 50%). La soupe selon l'invention est enrichie en maltodextrines branchées décrites dans l'exemple 1. A titre comparatif on prépare des soupes selon la même recette, mais comprenant soit une maltodextrine standard (GLUCIDEX®6) soit des fructo-oligo-saccharides (RAFTILOSE®P95). Le pH des soupes est de 4,2.

Recette (composition en grammes) :

| | **TEMOIN** | **Invention 1** | **Invention 2** | **Comparatif 1** | **Comparatif 2** | **Comparatif 3** | **Comparatif 4** |
|---|---|---|---|---|---|---|---|
| CLEARGUM®CO01 | 0.3 | 0.3 | 0.3 | 0.3 | 0.3 | 0.3 | 0.3 |
| Lactosérum | 0.37 | 0.37 | 0.37 | 0.37 | 0.37 | 0.37 | 0.37 |
| Huile de soja | 3 | 3 | 3 | 3 | 3 | 3 | 3 |
| Eau à 90°C | 9.8 | 9.8 | 9.8 | 9.8 | 9.8 | 9.8 | 9.8 |
| Saccharose | 5.0 | 5.0 | 5.0 | 5.0 | 5.0 | 5.0 | 5.0 |
| CLEARAM® CH20 | 2.4 | 2.4 | 2.4 | 2.4 | 2.4 | 2.4 | 2.4 |
| Concentré de tomate 28% | 36.0 | 36.0 | 36.0 | 36.0 | 36.0 | 36.0 | 36.0 |
| Acide citrique | 0.1 | 0.1 | 0.1 | 0.1 | 0.1 | 0.1 | 0.1 |
| Eau | 43 | 35.6 | 28.17 | 36.51 | 29.99 | 35.6 | 28.17 |
| Maltodextrines branchées | 0 | **7.43** | **14.86** | 0 | 0 | 0 | 0 |
| RAFTILOSE®P95 (ORAFTI) | 0 | 0 | 0 | **6.52** | **13.04** | 0 | 0 |
| GLUCIDEX®6 | 0 | 0 | 0 | 0 | 0 | **7.43** | **14.86** |
| Total (g) | 100 | 100 | 100 | 100 | 100 | 100 | 100 |

### Protocole :

Mélanger l'huile, l'eau à 90°C, l'émulsifiant CLEARGUM®CO01, et le lactosérum dans le bol d'un mixer KENWOOD pendant 10 minutes à vitesse maximale.

Mélanger séparément le saccharose, l'amidon modifié CLEARAM®CH20, le concentré de tomate, l'acide citrique et l'eau. Cuire au bain-marie jusqu'à 80°C.

Mélanger la sauce tomate ainsi obtenue à l'émulsion précédente pendant 30 secondes.

Mettre la soupe en conserves, et stériliser à 110°C pendant 50 minutes.

Avant consommation, la soupe est diluée à 50% en poids dans de l'eau et chauffée à 70°C.

Les différentes soupes obtenues sont soumises à une dégustation par un jury de 11 dégustateurs non entraînés, qui évalue les critères suivants :
- couleur
- consistance à la cuiller
- onctuosité en bouche
- saveur sucrée
- préférence

On obtient les résultats suivants :
Couleur : la soupe la plus claire est la soupe témoin, les soupes les plus foncées sont celles contenant la maltodextrine standard (réaction de Maillard).
Consistance à la cuiller : aucune différence significative n'a été notée autre que l'apport de consistance dû à l'augmentation de matière sèche. Les soupes contenant des maltodextrines standard et des FOS présentent toutefois une viscosité supérieure après stérilisation.
Onctuosité en bouche : après stérilisation, seules les soupes selon l'invention sont perçues comme plus onctueuses que le témoin.
Saveur sucrée : les soupes comprenant des fructo-oligo-saccharides ont été perçues comme étant trop sucrées.
Arrière-goût : les soupes contenant des maltodextrines standard et des fructo-oligo-saccharides présentent un arrière goût marqué : arrière goût d'amidon et odeur de miel pour les maltodextrines standard, arrière-goût de céréales pour les soupes aux fructo-oligo-saccharides. Les soupes selon l'invention ne présentent aucun arrière-goût, comme le témoin.
Préférence : les soupes selon l'invention sont nettement préférées des dégustateurs, car plus consistantes et plus onctueuses en bouche que la soupe témoin, sans arrière-goût désagréable que présentent les maltodextrines standard et les FOS, avec une saveur sucrée très proche du témoin. Les maltodextrines branchées sont donc tout à fait avantageuses dans la préparation de soupes enrichies en fibres conformes à l'invention. Elles conservent un comportement similaire au témoin même après stérilisation à haute température.

## Revendications

1. Boisson faiblement calorique enrichie en fibres présentant un pH acide et étant stérilisée ou pasteurisée **caractérisée en ce qu**'elle comprend 1,5 à 90 g en poids sec par litre de boisson, de maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole, et qu'elle est stable à pH acide et à chaud.

2. Boisson faiblement calorique enrichie en fibres selon la revendications 1, **caractérisée en ce que** lesdites maltodextrines branchées présentent une teneur en sucres réducteurs comprise entre 2 et 5% et une masse moléculaire moyenne en nombre Mn comprise entre 2000 et 3000 g/mole.

3. Boisson faiblement calorique enrichie en fibres selon l'une des revendications 1 à 2, **caractérisée en ce que** tout ou partie desdites maltodextrines branchées est hydrogénée.

4. Boisson selon l'une quelconque des revendications 1 à 3, **caractérisée en ce qu**'elle comprend un édulcorant intense choisi dans le groupe constitué par l'aspartame, l'alitame, l'enéotame, l'acésulfame K, la saccharine, le cyclamate, le sucralose, les stéviosides, la néohespéridine seuls ou en mélange.

5. Boisson selon la revendication 4, **caractérisée en ce que** ledit édulcorant intense est présent à hauteur de 0,01 à 1,0g/l.

6. Boisson faiblement calorique enrichie en fibres selon l'une quelconque des revendications 1 à 5, **caractérisée en ce qu**'elle comprend en outre de l'acide citrique, phosphorique ou ascorbique seuls ou en mélange, du benzoate de sodium, et un arôme.

7. Utilisation de maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole, pour substituer tout ou partie du sucre dans une boisson faiblement calorique présentant un pH acide et étant stérilisée ou pasteurisée.

8. Utilisation selon la revendication 7, **caractérisée en ce que** lesdites maltodextrines branchées sont incorporées à la boisson à raison de 1,5 à 90g, de préférence 5 à 90g sec par litre de boisson.

9. Boisson enrichie en fibres présentant un pH acide et étant stérilisée ou pasteurisée, **caractérisée en ce qu**'elle comprend 1,5 à 90g en poids sec par litre de boisson, de maltodextrines branchées présentant entre 15 et 35% de liaisons glucosidiques 1→6, une teneur en sucres réducteurs inférieure à 20% et de préférence comprise entre 2 et 5%, un indice de polymolécularité inférieur à 5 et une masse moléculaire moyenne en nombre Mn au plus égale à 4500 g/mole et de préférence comprise entre 2000 et 3000 g/mole et qu'elle est stable à pH acide et à chaud.

10. Boisson enrichie en fibres selon la revendication 9, **caractérisée en ce que** tout ou partie desdites maltodextrines branchées est hydrogénée.

11. Boisson enrichie en fibre selon l'une quelconque des revendications 1 à 10, **caractérisée en ce que** tout ou partie desdites maltodextrines branchées sont incorporées sous forme de mélange liquide avec un ou plusieurs composés choisis dans le groupe constitué par le glucose, le fructose, le xylose, le lactulose, l'érythrose, le maltitol, le xylitol, l'érythritol, l'isomalt, les dextrines indigestibles.

12. Soupe enrichie en fibres présentant un pH acide et étant stérilisée ou pasteurisée **caractérisée en ce qu**'elle comprend 1 à 30 %, de préférence 1 à 15% en poids de maltodextrines branchées présentant entre 15 et 35% de liaisons glucosidiques 1→6, une teneur en sucres réducteurs inférieure à 20% et de préférence comprise entre 2 et 5%, un indice de polymolécularité inférieur à 5 et une masse moléculaire moyenne en nombre Mn au plus égale à 4500 g/mole et de préférence comprise entre 2000 et 3000 g/mole et qu'elle est stable à pH acide et à chaud.

13. Utilisation d'un mélange de maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole, et d'édulcorants intenses pour substituer tout ou partie du sucre dans une boisson faiblement calorique présentant un pH acide et étant stérilisée ou pasteurisée.

14. Utilisation selon la revendication 13, **caractérisée en ce que** lesdites maltodextrines branchées sont incorporées à la boisson à raison de 1,5 à 90g, de préférence 5 à 90g sec par litre de boisson.

15. Utilisation selon la revendication 13 ou 14, **caractérisée en ce que** l'édulcorant intense est choisi dans le groupe constitué par l'aspartame, l'acésulfame K, la saccharine, le cyclamate, le sucralose, les stéviosides, la néohespéridine seuls ou en mélange.

## Claims

1. Fibre-enriched low-calorie drink having an acidic pH and being sterilized or pasteurized, **characterized in that** it comprises 1.5 to 90 g, by dry weight per litre of drink, of branched maltodextrins having between 15 and 35% of 1->6 glucoside linkages, a reducing sugar content of less than 20%, a polymolecularity index of less than 5 and a number-average molecular mass Mn at most equal to 4 500 g/mol, and **in that** it is stable to acidic pH and to heat.

2. Fibre-enriched low-calorie drink of claim 1, **characterized in that** said branched maltodextrins have a reducing sugar content of between 2 and 5%, and a number-average molecular mass Mn of between 2 000 and 3 000 g/mol.

3. Fibre-enriched low-calorie drink of claim 1 or 2, **characterized in that** all or some of said branched maltodextrins are hydrogenated.

4. The fiber-enriched low-calorie drink according to any one of claims 1 to 3, **characterized in that** it comprises an intense sweetener selected from the group consisting of aspartame, alitame, neotame, acesulfame K, saccharin, cyclamate, sucralose, steviosides and neohesperidin, alone or in the form of a mixture.

5. The fiber-enriched low-calorie drink of claim 4, **characterized in that** said intense sweetener is present in an amount of 0.01 to 1.0 g/l.

6. Fibre-enriched low-calorie drink according to any one of claims 1 to 5, **characterized in that** it comprises, in addition, citric, phosphoric or ascorbic acid, alone or in the form of a mixture, sodium benzoate and a flavouring.

7. Use of branched maltodextrins having between 15 and 35% of 1->6 glucoside linkages, a reducing sugar content of less than 20%, a polymolecularity index of less than 5 and a number-average molecular mass Mn at most equal to 4 500 g/mol, for replacing all or part of the sugar in a low-calorie drink having an acidic pH and being sterilized or pasteurized.

8. Use according to claim 7, **characterized in that** said branched maltodextrins are incorporated into the drink in an amount of 1.5 to 90 g, preferably 5 to 90 g on a dry basis per litre of drink.

9. Fibre-enriched drink having an acidic pH and being sterilized or pasteurized, **characterized in that** it comprises 1.5 to 90 g, by dry weight per litre of drink, of branched maltodextrins having between 15 and 35% of 1->6 glucoside linkages, a reducing sugar content of less than 20%, a polymolecularity index of less than 5 and a number-average molecular mass Mn at most equal to 4 500 g/mol, preferably between 2 000 and 3 000 g/mol and **in that** it is stable to acidic pH and to heat.

10. Fibre-enriched drink according to claim 9, **characterized in that** all or some of said branched maltodextrins are hydrogenated.

11. Fibre-enriched drink according to any one of claims 1 to 10, **characterized in that** all or some of said branched maltodextrins are incorporated in the form of a liquid mixture with one or more compounds selected from the group consisting of glucose, fructose, xylose, lactulose, erythrose, maltitol, xylitol, erythritol, isomalt and indigestible dextrins.

12. Fibre-enriched soup having an acidic pH and being sterilized or pasteurized, **characterized in that** it comprises 1 to 30%, preferably 1 to 15% by weight of branched maltodextrins having between 15 and 35% of 1->6 glucoside linkages, a reducing sugar content of less than 20%, a polymolecularity index of less than 5, and a number-average molecular mass Mn at most equal to 4 500 g/mol, preferably between 2 000 and 3 000 g/mol, and **in that** it is stable to acidic pH and/or to heat.

13. Use of a mixture of branched maltodextrins having between 15 and 35% of 1->6 glucoside linkages, a reducing sugar content of less than 20%, a polymolecularity index of less than 5 and a number-average molecular mass Mn at most equal to 4 500 g/mol, and an intense sweeteners for replacing all or part of the sugar in a low-calorie drink having an acidic pH and being sterilized or pasteurized.

14. Use according to claim 13, **characterized in that** said branched maltodextrins are incorporated into the drink in an amount of 1.5 to 90 g, preferably 5 to 90 g on a dry basis per litre of drink.

15. Use according to claim 13 or 14, **characterized in that** the intense sweetener is selected from the group consisting of aspartame, alitame, neotame, Acesulfame K, saccharin, cyclamate, sucralose, steviosides and neohesperidin, alone or in the form of a mixture.

## Patentansprüche

1. Kalorienarmes, mit Fasern angereichertes Getränk mit einem saueren pH-Wert, das sterilisiert oder pasteurisiert ist,
**dadurch gekennzeichnet,**
**dass** es pro Liter Getränk 1,5 bis 90 g Trockenmasse verzweigte Maltodextrine enthält, die zwischen 15 und 35 % Glucosidverbindungen 1-6, einen Gehalt an reduzierenden Zuckern von weniger als 20 %, eine Polymolekularitätszahl von unter 5 und eine durchschnittliche Molekülmasse mit der Zahl Mn von höchstens 4500 g/Mol aufweisen, und dass es einen stabilen saueren pH-Wert besitzt und wärmebeständig ist.

2. Kalorienarmes, mit Fasern angereichertes Getränk nach Anspruch 1,
**dadurch gekennzeichnet,**
**dass** diese verzweigten Maltodextrine einen Gehalt an reduzierenden Zuckern, der zwischen 2 und 5 % liegt, und eine durchschnittliche Molekülmasse mit der Zahl Mn, die zwischen 2000 und 3000 g/Mol beträgt, aufweisen.

3. Kalorienarmes, mit Fasern angereichertes Getränk nach einem der Ansprüche 1 und 2,
**dadurch gekennzeichnet,**
**dass** diese verzweigten Maltodextrine ganz oder zum Teil hydriert sind.

4. Kalorienarmes, mit Fasern angereichertes Getränk nach einem der Ansprüche 1 bis 3,
**dadurch gekennzeichnet,**
**dass** es einen starken Süßstoff enthält, der aus der Gruppe der Stoffe Aspartam, Alicam, Neotame, Acesulfam K, Saccharin, Cyklamat, Sucralose, der Stevioside, Neohesperidin als Einzelstoffe oder in einem Gemisch gewählt ist.

5. Getränk nach Anspruch 4,
**dadurch gekennzeichnet,**
**dass** dieser starke Süßstoff in einer Menge von 0,01 bis 1,0 g/l enthalten ist.

6. Kalorienarmes, mit Fasern angereichertes Getränk nach einem der Ansprüche 1 bis 5,
**dadurch gekennzeichnet,**
**dass** es ferner Zitronensäure, Phosphorsäure oder Ascorbinsäure als Einzelstoffe oder in einem Gemisch, Benzoatnatrium und einen Aromastoff enthält.

7. Verwendung von verzweigten Maltodextrinen, die zwischen 15 und 35 % Glucosidverbindungen 1-6, einen Gehalt an reduzierenden Zuckern von weniger als 20 %, eine Polymolekularitätszahl von unter 5 und eine durchschnittliche Molekülmasse mit der Zahl Mn von höchstens 4500 g/Mol aufweisen, um den gesamten oder einen Teil des Zuckers in einem kalorienarmen Getränk mit einem saueren pH-Wert, das sterilisiert oder pasteurisiert ist, zu ersetzen.

8. Verwendung nach Anspruch 7,
**dadurch gekennzeichnet,**
**dass** diese verzweigten Maltodextrine dem Getränk in einem Verhältnis von 1,5 bis 90 g, vorzugsweise von 5 bis 90 g Trockenmasse pro Liter Getränk beigemengt sind.

9. Mit Fasern angereichertes Getränk mit einem saueren pH-Wert, das sterilisiert oder pasteurisiert ist,
**dadurch gekennzeichnet,**
**dass** es pro Liter Getränk 1,5 bis 90 g Trockenmasse verzweigte Maltodextrine enthält, die zwischen 15 und 35 % Glucosidverbindungen 1-6, einen Gehalt an reduzierenden Zuckern von weniger als 20 % und vorzugsweise von 2 bis 5 %, eine Polymolekularitätszahl von unter 5 und eine durchschnittliche Molekülmasse mit der Zahl Mn von höchstens 4500 g/Mol und vorzugsweise von 2000 bis 3000 g/Mol aufweisen, und dass es einen stabilen saueren pH-Wert besitzt und wärmebeständig ist.

10. Mit Fasern angereichertes Getränk nach Anspruch 9,
**dadurch gekennzeichnet,**
**dass** diese verzweigten Maltodextrine ganz oder zum Teil hydriert sind.

11. Mit Fasern angereichertes Getränk nach einem der Ansprüche 1 bis 10,
**dadurch gekennzeichnet,**
**dass** diese verzweigten Maltodextrine ganz oder zum Teil in Form eines flüssigen Gemischs mit einer oder mehreren Verbindungen beigemengt sind, welche aus der Gruppe der Stoffe Glukose, Fruktose, Xylose, Laktose, Erythrose, Maltitol, Xylitol, Erythrit, Isomalt und der unverdaulichen Dextrine gewählt werden.

12. Mit Fasern angereicherte Suppe mit einem saueren pH-Wert, die sterilisiert oder pasteurisiert ist,
**dadurch gekennzeichnet,**
**dass** sie 1 bis 30 %, vorzugsweise 1 bis 15 % Gewichtsanteil verzweigte Maltodextrine enthält, die zwischen 15 und 35 % Glucosxdverbindungen 1-6, einen Gehalt an reduzierenden Zuckern von weniger als 20 % und vorzugsweise von 2 bis 5 %, eine Polymolekularitätszahl von unter 5 und eine durchschnittliche Molekülmasse mit der Zahl Mn von höchstens 4500 g/Mol und vorzugsweise von 2000 bis 3000 g/Mol aufweisen, und dass sie einen stabilen saueren pH-Wert besitzt und wärmebeständig ist.

13. Verwendung eines Gemischs von verzweigten Maltodextrinen, die zwischen 15 und 35 % Glucosidverbindungen 1-6, einen Gehalt an reduzierenden Zuckern von weniger als 20 %, eine Polymolekularitätszahl von unter 5 und eine durchschnittliche Molekülmasse mit der Zahl Mn von höchstens 4500 g/Mol aufweisen, sowie starke Süßstoffe, um den gesamten oder einen Teil des Zuckers in einem kalorienarmen Getränk mit einem saueren pH-Wert, das sterilisiert oder pasteurisiert ist, zu ersetzen.

14. Verwendung nach Anspruch 13,
**dadurch gekennzeichnet,**
**dass** diese verzweigten Maltodextrine dem Getränk in einem Verhältnis von 1,5 bis 90 g, vorzugsweise von 5 bis 90 g Trockenmasse pro Liter Getränk beigemengt sind.

15. Verwendung nach Anspruch 13 oder 14,
**dadurch gekennzeichnet,**
**dass** der starke Süßstoff aus der Gruppe der Stoffe Aspartam, Acesulfam K, Saccharin, Cyklamat, Sucralose, der Stevioside, Neohesperidin als Einzelstoffe oder in einem Gemisch gewählt ist.
